# EUROPEAN PATENT APPLICATION

(11) **EP 3 792 040 A1**
(43) Date of publication of application: **17.03.2021**
(21) Application number: 19196364.4
(22) Date of filing: 10.09.2019
(51) Int. Cl.: B29C 64/118, B29C 64/209, B33Y 30/00, B33Y 70/00

(54) **DISPENSING HEAD FOR FUSED FILAMENT TYPE ADDITIVE MANUFACTURING**

(71) Applicant: Nederlandse Organisatie voor toegepast- natuurwetenschappelijk Onderzoek TNO, 2595 DA 's-Gravenhage (NL); Chemelot Scientific Participations B.V., 6167 RD Geleen (NL)
(72) Inventor: STÜPP, César Augusto, 2595 DA 's-Gravenage (NL); GASPERINI, Andrea, 2595 DA 's-Gravenage (NL)
(74) Representative: V.O.

(57) **Abstract**

A dispensing head (1) for fused filament type additive manufacturing configured for dispensing a material (8) onto a substrate carrier platform (10) of an additive manufacturing apparatus, the dispensing head (1) comprising a material passage (7) extending from a receiving inlet (6) for receiving strands of solid material (8) to a dispensing outlet (4) for dispensing the material such as to serve as build material, a material heating unit for liquefying the material, and drive means for driving material through the material passage (7) by engagement of the strands of solid material (8), wherein the material heating unit comprises a solid radiation body (12) extending from the dispensing outlet (4) at least in a direction parallel to the substrate carrier platform (10) in use, defining a radiation face toward the substrate carrier platform (10), wherein the radiation body (12) is thermally separated from the dispensing outlet.

## Description

### Field of the invention

The present invention is directed at a dispensing head for fused filament type additive manufacturing configured for dispensing a material onto a substrate carrier platform of an additive manufacturing apparatus, the dispensing head comprising a material passage extending from a receiving inlet for receiving strands of solid material to a dispensing outlet for dispensing the material such as to serve as build material, a material heating unit for liquefying the material, and drive means for driving material through the material passage by engagement of the strands of solid material. The invention is further directed at a material heating element for use in a dispensing head, a method of manufacturing an object by means of fused filament type additive manufacturing, and an additive manufacturing apparatus.

### Background

The mechanical properties of 3D-printed parts currently lag behind those of conventionally manufactured parts due to the presence of high volume percent of voids and the incomplete welding between extruded adjacent and overlaid polymer lines. The reason for this limitation is because polymer interfacial diffusion and filament bonding only occur if the polymer is heated above its critical sintering temperature.

Fused deposition modeling (FDM) is an additive manufacturing technique that uses a dispensing head wherein a thermoplastic material is heated to extrude the molten material through a nozzle for deposition of the material onto a substrate or substrate carrier. The material is supplied to the dispensing head in the form of a wire or filament. The depositing is controlled on the basis of printing data. Because of the limited time the extruded polymers and its surrounding line spend at these high temperatures, fused deposition modeling (FDM) produces parts with incomplete filament bonding and creation of mechanical failure points.

In US2017/0072633, an FDM method has been proposed that uses pre-heating of the carrier or underlaying substrate layer, prior to deposition of the material. Apart from the additional optics required, another disadvantage of this method is that a laser illuminates the surface at a single wavelength, whereas the absorption spectrum of any arbitrary material typically consists of many wavelengths for which the material is responsive. Moreover, these absorption are different for each material, hence the results achieved with pre-heating in the manner proposed are rather material dependent.

### Summary of the invention

It is an object of the present invention to provide a fused deposition modelling technique wherein the problems described above are overcome, and which provides for efficient and well controllable heating of the substrate or carrier material underneath the location of printing in order to prevent the presence of voids and the incomplete welding and provide a strong interlayer bonding.

To this end, there is provided herewith a dispensing head for fused filament type additive manufacturing configured for dispensing a material onto a substrate carrier platform of an additive manufacturing apparatus, the dispensing head comprising a material passage extending from a receiving inlet for receiving strands of solid material to a dispensing outlet for dispensing the material such as to serve as build material, a material heating unit for liquefying the material, and drive means for driving material through the material passage by engagement of the strands of solid material, wherein the material heating unit comprises a solid radiation body extending from the dispensing outlet at least in a direction parallel to the substrate carrier platform in use, defining a radiation face toward the substrate carrier platform, wherein the radiation body is thermally separated from the dispensing outlet.

In accordance with the present invention heating of the material is performed by a material heating unit that comprises a solid radiation body. The solid radiation body extends from the dispensing outlet in a direction parallel to the substrate carrier platform in use. It thereby defines a radiation face towards the carrier platform to enable heat transfer by radiation from the solid radiation body. The radiation body is thermally separated from the dispensing outlet to prevent heat transfer between the solid radiation body and the dispensing head. This is preferred, because in this manner the solid radiation body can achieve a high temperature, where as at the same time the material in the dispensing head can be kept at low temperature. As a result, while moving the dispensing head relative to the substrate service, the radiation from the solid radiation body pre-heats the surface of the substrate carrier platform or the substrate layer thereon. The surface underneath may thereby be heated up to a high temperature such as to result in melting of the material from the dispensing outlet upon touching the surface. As a result, the material is heated up from below to a temperature which is well above the critical sintering temperature to thereby achieve the desired binding strength.

The use of a solid radiation body has the further advantage that radiation is emitted from the solid radiation body across a large range of wavelengths. As a result, the material underneath the layer to be printed is efficiently heated to the desired temperature. Because the radiation is emitted across a large range of wavelengths, heat transfer takes places efficiently for many materials, and the results of the method are therefore material independent. For example, already the material of the carrier platform itself largely differs from the material of the substrate to be printed, and due to the use of a solid radiation body a sufficiently high temperature easily be achieved for both types of materials. Moreover, in multi material printing arrangements, the material of the substrate may locally differ dependent on the printing requirements. Also here, the use of a solid radiation body in accordance with the present invention enables efficient heating of the substrate locally for any local material encountered.

The method of the present invention may well be applied to fused deposition modelling as presented here and above, but may likewise be applied to continuous fiber reinforced type fused deposition modelling. In the latter technique, the material to be printed on to the substrate carrier platform or substrate contains a reinforcement fiber that causes the end product to be strongly reinforced. Although dispensing heads may be different for either kind of fused deposition modelling mentioned above, and even within each type of fused deposition modelling different types of dispensing heads may be used, the application of a solid radiation body as proposed by the present invention may be applied to any type of dispensing head for this purpose.

In accordance with some embodiments, the radiation body extends from the dispensing outlet in at least one direction defining a relative travel direction of the dispensing head relative to the substrate carrier platform in use, such that the radiation body extends in at least one of a forward or backward direction with respect to the travel direction in use.

In these embodiments, the solid radiation body has a longitudinal shape, or includes an element that extends in a longitudinal direction, and may be mounted to the dispensing head in such a manner that the radiation body extends in either one of the forward or backward direction with respect to the travel direction in use. As a result, during the relative travelling of the dispensing head over the substrate surface or the carrier platform, the solid radiation body resides over the surface of the substrate or carrier platform for an extended duration (dependent on the relative velocity of the dispensing head over the substrate surface, and the length of the longitudinal part). Furthermore, if any further parts of the solid radiation body, e.g. sideways from the longitudinal direction, are absent, any heat that is applied to the solid radiation body is effectively applied for heating up the longitudinal part that causes pre heating of the substrate surface for printing.

In accordance with some embodiments, the radiation body is at least one of: a bar; a plurality of bars or legs extending in multiple directions from the dispensing outlet, a disc; or a circumferential element providing the radiation face and enclosing the dispensing outlet.

As may be appreciated, a plurality of bars in multiple directions enables to move the dispensing head relative to the substrate service in these directions wherein the bars or legs of the solid radiation body extend. A disk shape element allows to move the dispensing head relative to the substrate surface in any arbitrary direction, but has the disadvantage that the full element is to be heated at all times. A star shaped element defines a plurality of travel directions wherein the dispensing head may travel relative to the substrate surface, and have the benefit that it only contains material in these directions so that less heat disappears in unused directions. A single bar has the disadvantage that it only allows to radiate heat in one direction of travel (or to if forward and backward direction are considered different directions). The benefit of a bar shapes solid radiation body is that no heat is disappeared in any other direction than the travel direction defined by the bar. As mentioned above, in fact any circumferential element may be used for achieving at least part of the benefits of the present invention.

In accordance with some embodiments, the solid radiation body provides the radiation face having an elongated shape, and wherein the solid radiation body suspends from or is mounted to the dispensing head in a rotatable manner, further comprising a rotation actuator for rotating the solid radiation body relative to the dispensing outlet, wherein the rotation actuator is configured for cooperating with a controller such as to align the elongated shape of the radiation body with a direction of relative motion between the dispensing head and the substrate carrier platform in use. For example, an elongated shape could be a bar shape element, which is rotated around the dispensing outlet dependent on the travel direction of the dispensing head relative to the substrate surface. The controller of the dispensing head may cause the solid radiation body to follow the travel direction of the dispensing head relative to the substrate surface. The advantage of these types of embodiments is that a relatively small and compact (e.g. bar shapes) solid radiation body may be used which can be rotated around the dispensing head such as to enable the dispensing head to travel in any arbitrary direction without dissipating heat in unused directions.

In accordance with some embodiments, the dispensing head further comprises a height adjustment actuator cooperating with the solid radiation body, for adjusting the height of the radiation face above the substrate carrier platform or a substrate surface located thereon, wherein the height adjustment actuator is configured to be controlled by a controller for adjusting said height dependent on an areal density of printed material in an area surrounding a deposition location on the substrate surface in use. A height adjustment actuator is controlled by the controller and may therefore advantageously be used for adjusting the height of the solid radiation body above the substrate surface. For example, if some part of the substrate is desired to receive less heat than other parts of the surface, the solid radiation body can be moved up relative to the substrate surface such as to increase the height and decrease the heat transfer to the surface. This may be advantageous in areas where the areal density of printed material near the deposition location is small and thereby heats up faster than other areas. For example, an object having an edge of a wall or other elements surrounded by voids will heat up more faster because access heat can only travel trough the substrate material insubstantially the downward direction because less building material is locally present in the substrate, the substrate heats up much faster. To prevent this from happening, the height adjustment actuator may be controlled such as the moved solid radiation body upwards to decrease the height transfer. Reversely, in areas where a lot of printing material is present locally across the area, the height adjustment actuator may be moved downward to increase the heat transfer.

In accordance with some further embodiments, the dispensing head further comprises a controller for controlling the heating elements, such as to control a temperature of the solid radiation body. Although the temperature of the solid radiation body is more difficult to control than the height thereof, the increase or decrease of the temperature of the solid radiation body may be beneficial in some situations wherein heat transfer can be insufficiently controlled by a control of the height adjustment actuator.

In accordance with some embodiments wherein the dispensing head comprises a rotatable solid radiation body having an elongated shape, the controller is further configured for controlling the rotation actuator, wherein the rotation actuator is controlled dependent under direction of motion between the dispending head and the substrate carrier platform for aligning the solid radiation body. Likewise, in other embodiments or in the dispensing head comprises a height adjustment actuator, the controller is further configured for controlling the height adjustment actuator, wherein the height of the radiation face is controlled dependent on the areal density of printed material in the area surrounding the deposition location on the substrate surface in use. The advantages of these embodiments have been explained above. The controller has access to the printing data, and also to printing data of previous layers underneath the substrate surface. This can be used to accurately control the height end or the rotation direction solid radiation body.

The solid radiation body of the present invention may be made of any suitable material that allows for heat transfer across a desired range of wavelengths, such as to enable efficient heating of the substrate surface. In some preferred embodiments of the dispending head according to the present invention, and least one of: the radiation body is made of a material including at least one element of a group comprising: metal, a ceramic, or a thermosetting polymer; or the radiation body is made of metal and the radiation face of the radiation body comprises a metal oxide surface; or the radiation body is made of metal and the radiation face comprises a coating layer of a material providing the radiation body with an emissivity in excess of an emissivity of the metal. A radiation body having a high emissivity is preferred because this allows radiation of heat to take place efficiently.

Ceramics are known for having a high emissivity and may therefore well be used for providing the solid radiation body. Also metals have a sufficiently high emissivity, al be it less than ceramics. Metal oxide, like ceramics, provide solid radiation bodies with sufficient high emissivity. In addition to a high emissivity, the material of which the solid radiation body may be manufactured is desired to provide high internal head conduction. Metals are known for conducting heat well.

Therefore, most advantageously and in a preferred embodiment, the solid radiation body is made of a metal having a radiation face that comprises a metal oxide surface. For example, an iron or steel solid radiation body having a rusted radiation face provides both a high internal heat conduction and a high emissivity at the surface. As may be appreciated, a metal having a metal oxide surface may easily be obtained by oxidation of the metal component, and thus be created and relatively low costs. In accordance with further embodiments, in stead of a metal oxide radiation face, the radiation face of the solid radiation body may also comprise a coating layer of a material which provided with a sufficiently high emissivity that is higher than the emissivity of the metal.

In accordance with further embodiments, the dispending according the present invention further comprises a further heating unit which is operatively associated with the material passage to form a liquefying zone for liquefying the material in the material passage and located between the receiving inlet and the dispensing outlet for dispensing the material in a liquefied state. Some of the continuous fiber reinforced fused deposition modelling type dispensing heads comprise such a further heating unit internal to the dispensing head, which may advantageously be used in combination with a solid radiation body as claimed in the present invention.

In accordance with a second aspect of the present invention there is provided a material heating element for use in a dispensing head according to any one or more of the preceding claims, wherein the material heating element comprises a mounting structure configured for receiving a dispensing outlet of the dispensing head for mounting the material heating element to the dispensing head, the material heating element further comprising a solid radiation body extending from the mounting structure at least in a radial direction for defining a radiation face toward a substrate carrier platform in use, further comprising a thermal isolation structure for thermally separating the solid radiation body from the dispensing outlet. The advantage of such a heating element is that it may easily be installed on existing dispensing heads, such as to cooperate therewith and enable the conventional dispensing heads to apply a method in accordance with the present invention.

In some preferred embodiments of the present invention, the solid radiation body is shaped such as to, from the dispensing outlet in the radio direction, graduate decrease in height of the radiation face above the substrate carrier platform or substrate surface located thereon, such as to provide a compacting area for exerting pressure on the build material deposit on the substrate carrier platform or on the substrate surface. The advantage of providing a confecting area is that upon printing of the build material on the substrate surface, by exerting pressure on the build material any voids in the build material are pressed out. Moreover, in combination with the solid radiation body which heats the build material from below, directly upon leaving the dispensing outlet or nozzle part, the top surface of the build material is still relatively clod and solid while the heat is not yet fully distributed. The lower part of the build material which is in touch with the surface underneath is already molten, and exerting pressure from above advantageously makes use of the more solid upper part of the build material to exert the pressure and press out any locked-in gas bubbles and close voids at the interface with the preceding layer underneath.

In accordance with a third aspect thereof, the present invention provides a method of manufacturing an object by means of fused filament type additive manufacturing, the method comprising: dispensing, by a dispensing head, a material onto a substrate carrier platform of an additive manufacturing apparatus, the dispensing comprising: receiving strands of solid material via a receiving inlet; driving, using a driving actuator, the material through the material passage by engagement of the strands of solid material, for passing the material via a material passage to a dispensing outlet; and heating the material for bringing the material in a liquefied state such as to serve as build material; wherein the heating comprises heating at least one of the substrate carrier platform or a substrate surface on the platform by radiating heat, using the material heating element via a solid radiation body extending from the dispensing outlet at least in a radial direction to define a radiation face toward the substrate carrier platform, wherein the radiation body is thermally separated from the dispensing outlet.

This method may be applied in combination with various control methods. For example, in accordance with some embodiments the method further comprises controlling, using a controller, a temperature of the solid radiation body, wherein the controlling includes: estimating a residence time of the dispensing head above an area of at least one of a substrate surface or the substrate carrier platform based on printing data for a layer of the object; setting the temperature reversely dependent on the residence time estimated. The residence time of the dispensing head above an area of the substrate surface or the substrate carrier platform can be easily determent by the controller by considering the printing data for one layer of the object to be printed. Once the residence time is known, the temperature of the solid radiation body, or the height radiation thereof can be adapted based on the estimated residence time. For example the temperature can be set reversely dependent on the residence time estimated.

In accordance with some further embodiments, at least one of the material heating element order dispensing head comprises a height adjustment actuator cooperating with a solid radiation body, and wherein the controlling further comprises: determining, by the controller using the printing data, an areal density of printed material in an area surrounding a deposition location on the substrate surface; and adjusting, by the controller using the height adjustment means, a height of the radiation face above the substrate carrier platform or the substrate surface located thereon, dependent on the determined areal density of printed material.

It has been explained hereinabove, that the height of the solid radiation body may be made dependent on the areal density of printing material and also dependent on the amount of material underneath the upper layer. By considering the printing data on the substrate, the controller may easily adapt the height of the solid radiation body dependent on the amount of heat transfer desired.

In accordance with some embodiments, the radiation face has an elongated shape and wherein the solid radiation body is mounted to the dispensing head in a rotatable manner, and wherein the controlling further comprises: determining, by the controller, a direction of relative motion between the dispensing head and the substrate carrier platform based in the printing data; and rotating, using a rotation actuator, the solid radiation body relative to the dispensing outlet such as to align the elongated shape of the radiation body with the direction of relative motion.

It has been explained above, that determining and desired direction of the rotation the solid radiation body may easily perform by the controller under basis of the printing data.

The method, in some embodiments, may further comprise a step of post-heating of the deposited build material using the solid radiation body. Post-heating, by the solid radiation body, enables an additional annealing step to be carried out such as to smoothen the surface.

In accordance with the fourth aspect the present invention provides an additive manufacturing apparatus comprising at least one of a dispensing head in accordance with the first aspect, or a material heating element in accordance with the second aspect, or is being configured for performing a method according to the third aspect.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 schematically illustrates a dispensing head in accordance with an embodiment of the present invention;
Figure 2 schematically illustrates a nozzle of a dispensing head in accordance with the further embodiment of the present invention;
Figure 3A-3D schematically illustrates a solid radiation body in accordance with an embodiment of the present invention in a perspective view (figures 3A and 3C), top view (figure 3D) and side view (figure 3B);
Figure 4 schematically illustrates a solid radiation body in accordance with a further embodiment of the present invention;
Figure 5 schematically illustrates a solid radiation body in accordance with a further embodiment of the present invention;
Figure 6 schematically illustrates a dispensing head in accordance with an embodiment of the present invention;
Figure 7 schematically illustrates a dispensing head in accordance with a further embodiment of the present invention;
Figure 8 schematically illustrates a dispensing head in accordance with a further embodiment of the present invention;
Figure 9 schematically illustrates a method of manufacturing an object in accordance with an embodiment of the present invention;
Figure 10 schematically illustrates a control step of a method of the present invention, such as the method of figure 9.

### Detailed description

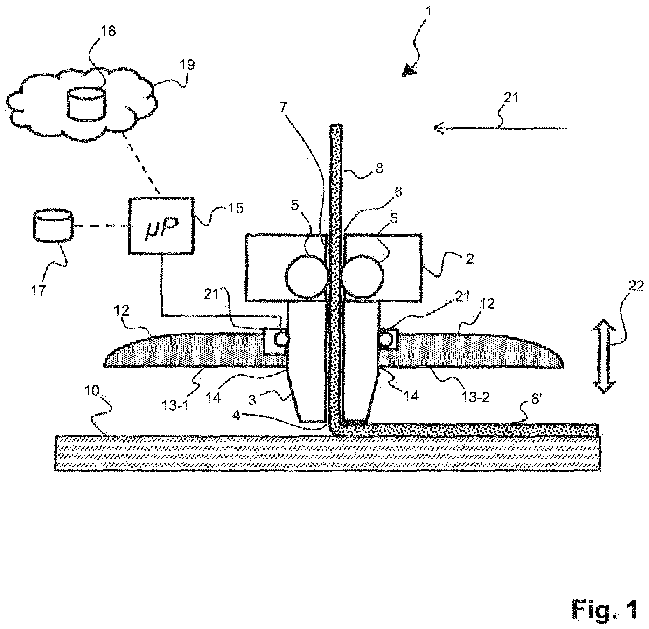

Figure 1 schematically illustrates a dispensing head 1 in accordance with an embodiment of the present invention. The dispensing head 1 consists of a basic part 2 and a nozzle part 3. The nozzle comprises a dispensing outlet 4 facing a substrate carrier platform 10 (or substrate in use). The dispensing head 1 comprises a material passage 7 which extends between a receiving inlet 6 and the dispensing outlet 4. The receiving inlet 6 is configured for receiving a strand 8 of fusible solid material, which is to serve as build material 8'. To this end, the build material 8 is to be heated above its melting temperature, and further above its sintering temperature to obtain proper binding of the build material 8' to a previous layer of the substrate to be printed. The strand 8 of solid material is driven through the dispensing head 1 via driving means 5 which engage the strand 8 and move it towards the dispensing outlet 4.

In accordance with the present invention, the heating unit of the dispensing head 1 is provided by a solid radiation body 12 which is mounted on the nozzle part 3 of the dispensing head 1. The solid radiation body 12, at least in the travel direction 21 of the dispensing head relative to the carrier platform 10, comprises a radiation face 13-1 which is faced towards the surface of the carrier platform 10 (or the substrate surface in use). Solid radiation body 12 comprises, or cooperates with, a heating unit that heats up the solid radiation body 12 such that the radiation face 13-1 starts radiating heat towards the surface of carrier platform 10. Thereby, radiation from the radiation face 13-1 pre-heats the carrier platform 10 (or, in use, the last printed layer of a substrate) at the location where the dispensing outlet 4 will pass upon moving of the dispensing head 1 in the direction 21. The length over which the solid radiation body 12 extends over the carrier platform in the direction 21, together with the velocity of the dispensing head 1 relative to the carrier platform 10, determines the residence time of the solid radiation body 12 over the carrier platform surface (or substrate surface) prior to dispensing. In turn, this determents the temperature at which the surface of the carrier platform 10 will heat up due to the radiation.

When the dispensing outlet 4 passes over the pre heated surface of carrier platform 10, the dispensed building material 8' will absorb the heat from the surface 10 and be heated form below. By pre heating the surface 10 at least slightly above the sintering temperature of the building material 8, the temperature of the build material 8' will be heated above this sintering temperature resulting in a proper bonding of the build material 8' with the previous layer of the substrate. As may be appreciated, in use it may be desired that a stronger bonding is obtained when the build material 8' is dispensed onto a previous layer of a printed substrate, where as the build material 8' is kept at a slightly lower temperature when it is deposited directly onto the carrier platform 10 (being the first one of the printed layers of the substrate to be printed). This will ensure that the printed subject can be easily separated from the carrier platform after it has been printed, while between the subsequent layers of the printed substrate a strong binding is obtained.

The solid radiation body 12 further comprises an elongated part defining a radiation face 13-2 that extends over the printed build material 8' after it has been deposited. In the travel direction 21 of the dispensing head, the radiation face 13-2 thereby provides post-heating of the building material 8', resulting in a smoothening of the surface by annealing. It will be appreciated, that dispensing head 1 may reverse its direction after it has reached the edge of the substrate to be printed. When the direction of travel indicated by arrow 21 reverses, radiation face 13-2 will be the pre heating radiation face while radiation face 13-1 will become the post heating radiation face.

Preferably, at the mounting edge 14 where the solid radiation body 12 is mounted to the nozzle part 3 of the dispensing head 1, a thermally isolating element is present to prevent heat from the solid radiation body 12 to heat up the dispensing head 1. This results in proper temperature control, preventing dissipation of heat through the dispensing head 1, while also enabling the solid material 8 to be kept below melting temperature. In some embodiments (to be discussed later), a further internal heating element may be present in the dispensing head which also pre heats the material 8 prior to dispensing. As may be appreciated, even in these embodiments the presence of a thermally isolating layer or element between the solid radiation body 12 and the nozzle part 3 of the dispensing head 1 is beneficial to the controllability of the temperature within the dispensing head 1 and the temperature of the solid radiation body 12.

In accordance with some embodiments of the present invention, a height adjustment actuator 21 may be present on either one of the dispensing head 1 or the solid radiation body 12 which allows to control the height of the solid radiation body 12 above the surface of the carrier platform 10 (or the substrate surface in use). The height adjustment actuator 21 may be controlled via a microprocessor or controller 15. For example, the height adjustment actuator may be controlled such as to increase the height of the solid radiation body 12 over the surface of the carrier platform 10 in order to lower the temperature at the surface 10, or to prevent overheating of certain parts of the substrate where the amount of printed material is limited (e.g. the areal density of the printed material is lower). For example, the substrate to be printed consisting of edges which are separated by voids (e.g. a container part more or like) comprises areas with hardly any building material, and some areas with edges with limited amount of building material. When the areal density of printing material varies, the controller 15 may control the height of the solid radiation body 12 by controlling the height adjustment actuator 21, based on printing data of the layer to be printed or the previous layer which may be obtained from the memory 17 or from a network attached storage or cloud memory 18 accessible trough a network 19. The height in figure 1 is indicated by arrow 22.

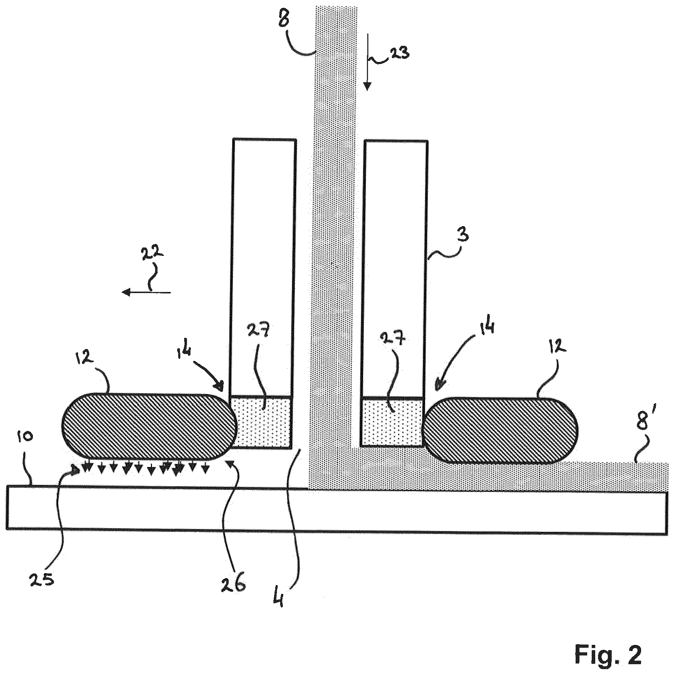

Figure 2 illustrates a further embodiment of a dispensing head in accordance with the present invention. In figure 2, a solid radiation body 21 is installed on the nozzle part 3 of a dispensing head. As illustrated, in the mounting area 14 a thermally isolating element 27 prevents the forming of a heat bridge between the nozzle part 3 and the solid radiation body 12. Therefore, as a result of the thermally isolating elements 27, the temperature of the solid radiation body 12 can be independently controlled and set from any operating temperature in the dispensing head 1.

Further illustrated in figure 2 is the height radiation provided by the solid radiation body 12 that preforms the pre-heating of the surface of carrier platform 10. The heat radiation is schematically illustrated by the arrows 25. The travel direction of the dispensing head 1 over the carrier platform is indicated by arrow 22. Arrow 23 illustrates the travel direction of the material 8 to be used as building material 8' after dispensing.

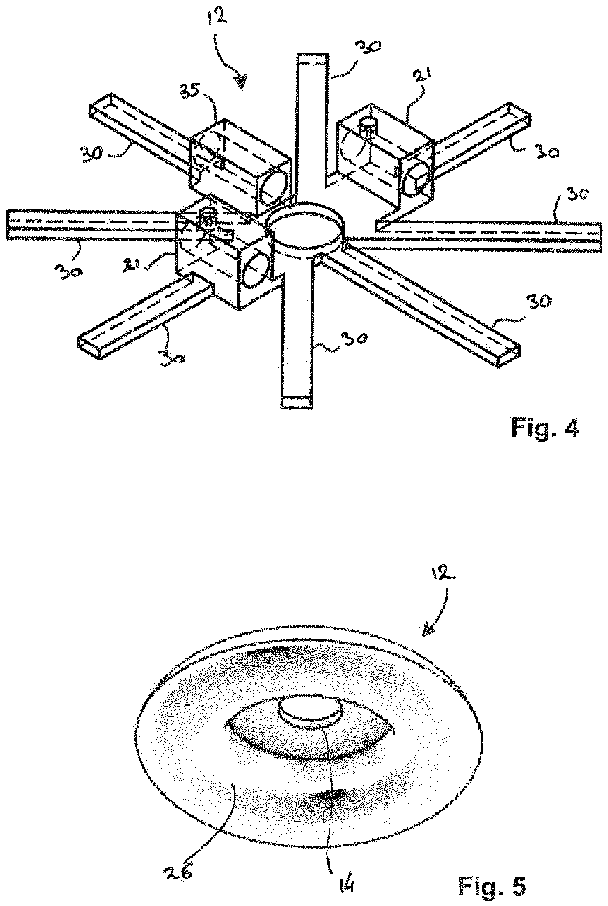

In the embodiment of figure 2, the solid radiation body 12 may for example be formed by or comprise a ring shaped element (e.g. such as the ring shaped element to be discussed in figure 5 below). Such an element may be present near the mounting area 14 of the solid radiation body 12 on the nozzle part 3, to provide a graduate decrease in height that forms a compacting area 26. In the travel direction 22, the compacting area 26 of the trailing part of the solid radiation body 12 thereby exerts a pressure on the building material 8'. This has the effect of any voids or air to be pressed out of the molting building material 8'. Preferably, but not essential, the compacting area, as illustrated in figure 2, is located near the dispensing outlet 4 of the dispensing head. As a result, the pressure is exerted at a location where the upper part of the building material 8' is still relatively cold (note that the building material 8' is heated from below by the pre heated surface 10). This is beneficial to the pressing out of any voids out of the building material 8'.

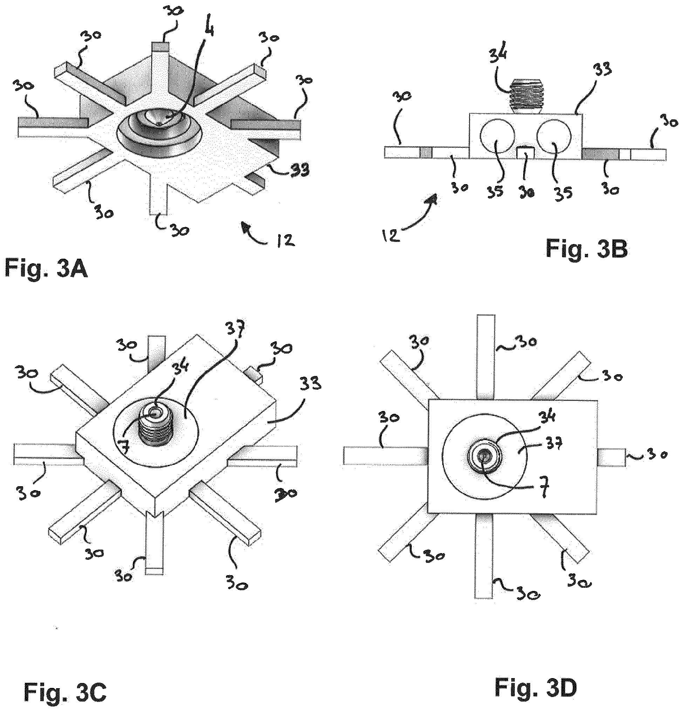

Figures 3A-3D illustrate various views of the solid radiation body in accordance with the embodiment of the present invention. As illustrated in figure 3A, the solid radiation body 12 comprises a plurality of legs 30 which allow a dispensing head to be moved in different directions relative to a substrate or carrier platform. Counting the forward and backward direction as separate directions, the total of eight legs 30 in the embodiment illustrated in figure 3A, allows the dispensing head to travel in eight different directions (four main directions in either forward or backward direction). In the middle, the solid radiation body comprises a housing element 33 wherein elements such as actuators and/or heaters may be housed. Figure 3B provides a fined view of the solid radiation body 12 of figure 3A. As can be seen, the housing element 33 comprises two heating elements 35 which allow to heat up the solid radiation body 12. Figure 3A also shows the dispensing outlet 4 in the middle of the solid radiation body 12. In figure 3B, in the embodiment illustrated in these figures, a mounting structure 34 is illustrated which allows mounting of the solid radiation body to a dispensing head.

Figures 3C and 3D illustrate a top view of the radiation body 12 (including a prospective view) showing the mounting structure 34 having an internal material passage 7 towards the dispensing outlet 4. The figures also illustrate a rotation actuator which allow for rotation of the solid radiation body to align the legs 30 in a different direction, or to adjust their alignment properly. The rotation actuator 37 may be controlled by the controller 15, and will be explained later. The movability of the dispensing head in many different directions is advantageous, in particular for fused deposition modeling and continuous fiber reinforced fused deposition modeling, as it prevent that the dispensing of the strand of material has to be interrupted often.

Figure 4 illustrates a further embodiment of a solid radiation body 12 of the present invention, illustrating the legs 30. Also shown are the locations 21 wherein a height adjustment actuator may be mounted for adjusting the height of the solid radiation body above a carrier platform 10. In the embodiment illustrated in figure 4, a single heating element 35 allows heating to solid radiation body to desired temperature.

Figure 5 schematically illustrates a disk shape element that may be applied as solid radiation body of its own. The use of a disk shape element allows for the relative travel of the dispensing head in any desired direction, without the need for a rotation actuator. The element of figure 5 is shaped such as to provide a compacting area 26 after dispensing of the building material 8'. As one may appreciate, the disk shape element illustrated in figure 5 may also be part of a larger solid radiation body, for example forming a central part thereof.

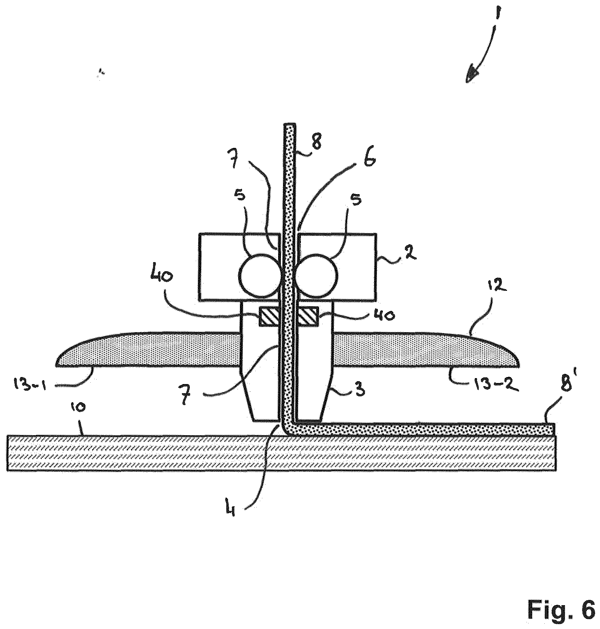

Various embodiments of dispensing head are further illustrated in figures 6 through 8, each having its own characteristics or features that may be present in the dispensing heads of the present invention. The present invention is not limited to these embodiments. The various characteristic elements of these embodiments may be present in any of the other embodiments, and are merely illustrated for illustration here.

In figure 6, the dispensing head 1 comprises an additional internal heating element 40 that pre-heats the material 8 to be printed upstream of the dispensing outlet 4. For example, the internal heater 40 may-pre heat the material 8 to just below the melting temperature, such that less heat may be applied by the solid radiation body to the carrier platform 10. Moreover, as many types of existing dispensing heads include an internal heating element, figure 6 also illustrates that a solid radiation body 12 in accordance with some aspects of the present invention may easily be installed on existing dispensing heads and may cooperate with the heating elements comprised thereby. For example, the controller 15 of the dispensing head may be (re-)programmed, to control the temperature of the solid radiation body 12 and the internal heater 40 jointly in cooperation. For example, the controller 15 may be programmed not to use the internal heater 40 at all, and completely rely on heating by the solid radiation body 12. Alternatively, the internal heater 40 may be controlled such as to be used for pre-heating the building material 8 (as described above) whereas the solid radiation body 12 may pre-heat the surface 10 of the carrier platform (or, in use, the substrate to be printed) in order to perform the method of the present invention.

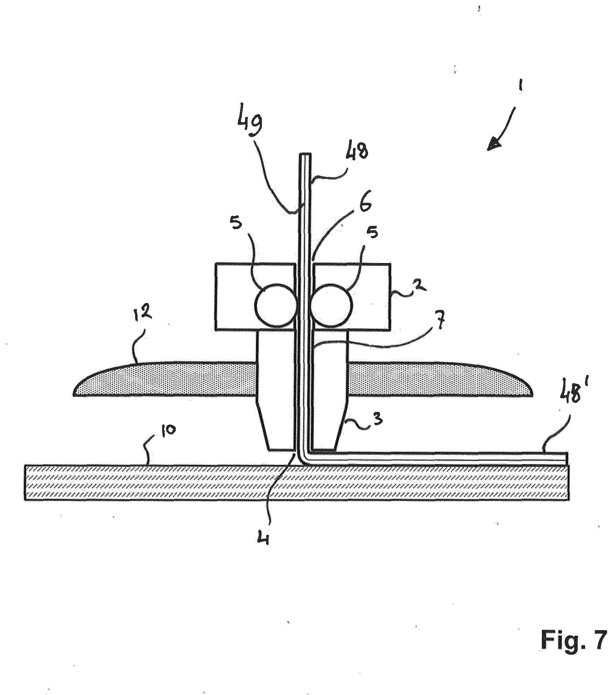

A further embodiment of the present invention is illustrated in figure 7. The dispensing head 1 of figure 7 does not differ very much from the dispensing head illustrated in figure 1, but is applied, or is arranged for performing continuous fiber reinforced fused deposition modelling. To this end, the strand of material to be fed into the receiving inlet of the dispensing head 1, may be a strand 48 comprising an already embedded reinforcement fiber 49. The working of the dispensing head 1 illustrated in figure 7 is similar to the working of the dispensing head illustrated in figure 1. The solid radiation body 12 pre-heats the surface of the carrier platform 10 (or the upper surface of the substrate to be printed, in use) and the building material 8' after it has left the dispensing outlet 4, is heated from below such as to reach a temperature above the sintering temperature. Optionally a compacting area 26 may be present near the dispensing outlet 4 for exerting a pressure on the deposited building material 48 in a same manner as described further above.

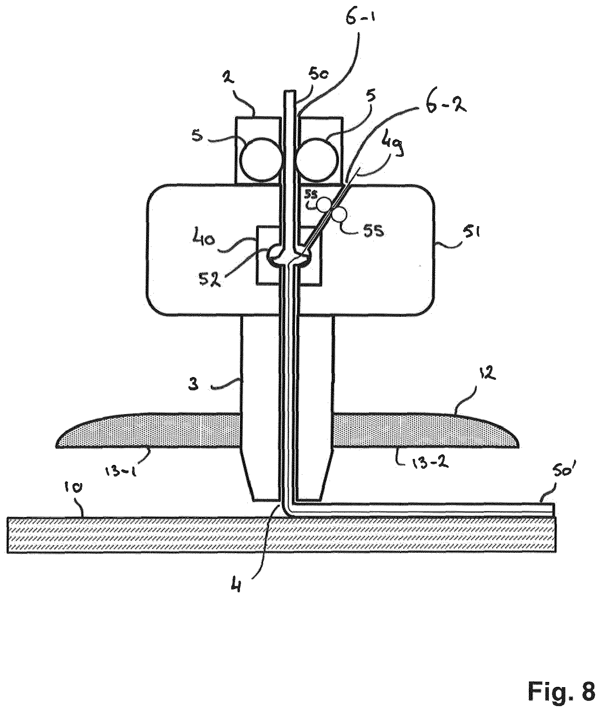

Alternatively, as illustrated in figure 8, a dispensing head 1 for performing continuous fiber reinforced fused deposition modelling may comprise an internal heater unit 40. This dispensing head 1 may comprise a first receiving inlet 6-1 for receiving a strand 50 of solid material and a second receiving inlet 6-2 for receiving a reinforcement fiber 49. The internal heating element 40 comprises a heating chamber 52 wherein the material from the strand 50 is molten. The drive units 5 force the strand 50 of material into the dispensing head 1 such as to build up the pressure in the heating chamber 52 to force the molten material towards the dispensing outlet 4 through the material passage 7. An additional fiber drive element 55 drives the reinforcement fiber 49 into the heating chamber 52. From there, the molten build material 50' moves towards the dispensing outlet 4 including the fiber 49. The solid radiation body 12 pre-heats the surface 10 to a temperature above the critical sintering temperature such as to enable proper binding of the building material 50' as sent to the layer underneath.

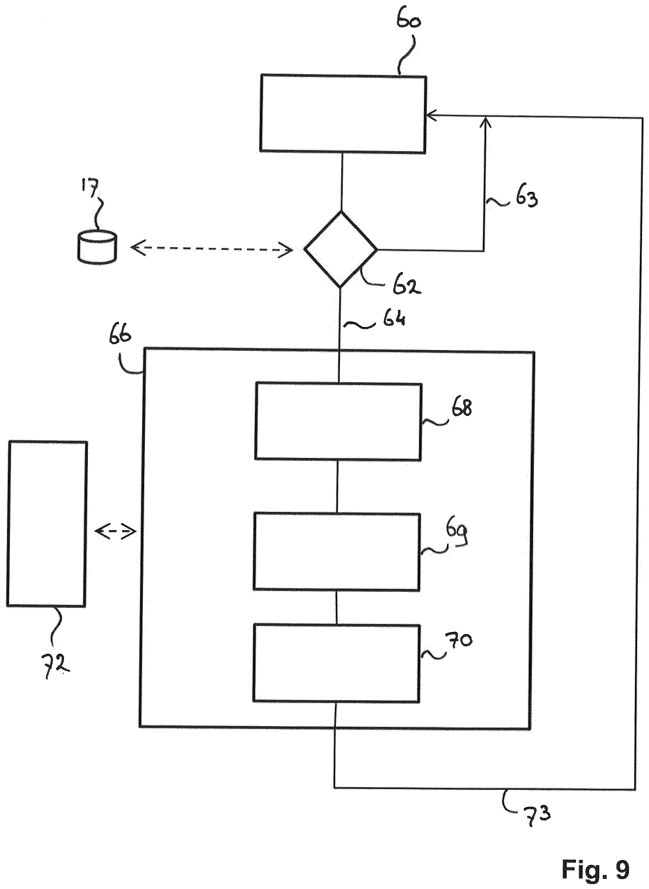

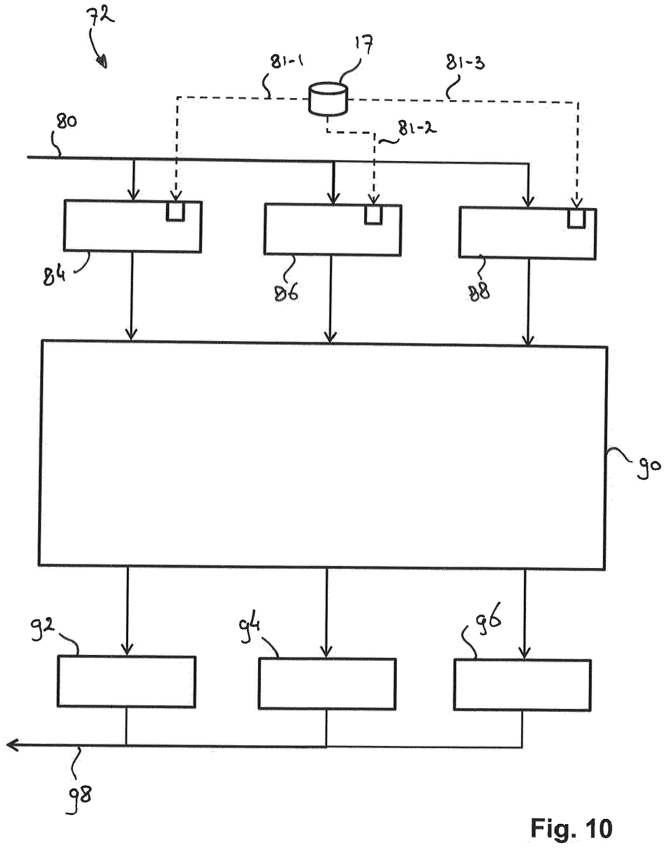

Figure 9 schematically illustrates a method in accordance with an aspect of the present invention. In figure 9, the method starts with a movement step 60 of the dispensing head relative to the carrier platform 10. During the movement step 60, the dispensing head 1 reaches a new location above the surface of the carrier platform 10. In step 62, it is decided whether or not at that location building material is to be printed. As input to this process, the dispensing head receives printing data from the memory 17 for the layer to be printed. If no building material needs to be printed, the decision step (via arrow 63) goes back to step 60 such as to move the dispensing head 1 to a new location. Otherwise the method continues via branch 64. In step 66 the dispensing head dispenses building material onto the substrate surface. The dispensing step 66 comprises the following sub-steps. In step 68 the dispensing head 1 receives the strand of solid material via the receiving inlet. In step 69 the material is driven, using the driving actuator 5, through the material passage 7 towards the dispensing outlet 4. Then in step 70, the building material is dispensed onto the surface and is heated by the already pre-heated surface of the carrier platform 10. The heating step 70 includes a pre-heating step of the substrate surface or carrier platform 10 by radiating heat using a solid radiation body 12 as described above. In accordance with the method of the present invention, the solid radiation body 12 is thermally isolated from the dispensing outlet 4. The pre-heating, dispensing of material onto the surface and post-heating is controlled by a controller in controlling step 72. Controlling step 72 is further described herein below with reference to figure 10. After step 66, via branch 73, the method continues in step 60 where the dispensing head 1 moves to a new location.

As referred to above, figure 10 schematically illustrates the control of the dispensing method in accordance with the present invention. In step 72, various parts and operational parameters of the dispensing head are controlled by the controller 15. The controlling step 72 mainly relies on printing data as input, which is illustrated by the dotted arrows 81-1, 81-2 and 81-3 to the various steps 84, 86 and 88. Furthermore, the controller relies on other input such as sensor data and operational data available, which other input is schematically indicated by arrow 80 to each of the steps 84, 86 and 88. In step 84, the controller estimates the residence time of the dispensing head above an area of the substrate surface or substrate carrier platform. This is estimated on the basis of printing data 81-1 and on the relative velocity of the dispensing head 1 relative to the substrate surface which is received as operational data via input 80. In step 86, the controller uses printing data 81-2 to determine an areal density of printed material in an area surrounding a deposition location on the substrate surface. The deposition location is received as input 80 as an operational parameter. Additionally, printing data from earlier layers may also be used for determining the amount of printed material underneath the layer to be printed.

In step 88, the controller 15 determines a direction of relative motion between the dispensing head and the substrate carrier platform. To this end, the controller may receive the present direction of motion as an operational parameter from the input 80 and from the printing data it may determine whether this direction of motion is to be continued with. The output of steps 84, 86 and 88 may serve as input to step 90, wherein the controller determines how to control or adapt the printing operation. For example, the controller may determine a desired temperature at the substrate surface and from there may determine how the height of the solid radiation body may need to be increased or decreased, how the temperature of the solid radiation body 12 may be adapted, or whether the solid radiation body 12 may need to be rotated to align with a new travel direction. In steps 92, 94 and 96 the controller 15 provides instructions for adapting the operation of the various elements, such as the heating element 35 of the solid radiation body (in step 92), the height adjustment actuator 21 for adjusting the height of the solid radiation body 12 (in step 94) and the rotation actuator for changing the alignment rotation of the solid radiation body 12 (in step 96). These instructions are provided as output 98 back to the dispensing head 1.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

## Claims

1. Dispensing head for fused filament type additive manufacturing configured for dispensing a material onto a substrate carrier platform of an additive manufacturing apparatus, the dispensing head comprising a material passage extending from a receiving inlet for receiving strands of solid material to a dispensing outlet for dispensing the material such as to serve as build material, a material heating unit for liquefying the material, and drive means for driving material through the material passage by engagement of the strands of solid material, wherein the material heating unit comprises a solid radiation body extending from the dispensing outlet at least in a direction parallel to the substrate carrier platform in use, defining a radiation face toward the substrate carrier platform, wherein the radiation body is thermally separated from the dispensing outlet.

2. Dispensing head according to claim 1, wherein the radiation body extends from the dispensing outlet in at least one direction defining a relative travel direction of the dispensing head relative to the substrate carrier platform in use, such that the radiation body extends in at least one of a forward or backward direction with respect to the travel direction in use.

3. Dispensing head according to claim 1 or 2, wherein the radiation body is at least one of: a bar; a plurality of bars or legs extending in multiple directions from the dispensing outlet; a disc; or a circumferential element providing the radiation face and enclosing the dispensing outlet.

4. Dispensing head according to any one or more of the preceding claims, wherein at least one of:
the radiation body is made of a material including at least one element of a group comprising: a metal, a ceramic, or a thermosetting polymer; or
wherein the radiation body is made of metal and wherein the radiation face of the radiation body comprises a metal oxide surface; or
wherein the radiation body is made of metal and wherein the radiation face comprises a coating layer of a material providing the radiation body with an emissivity in excess of an emissivity of the metal.

5. Dispensing head according to any one or more of the preceding claims, wherein the solid radiation body provides the radiation face having an elongated shape, and wherein the solid radiation body suspends from or is mounted to the dispensing head in a rotatable manner, further comprising a rotation actuator for rotating the solid radiation body relative to the dispensing outlet, wherein the rotation actuator is configured for cooperating with a controller such as to align the elongated shape of the radiation body with a direction of relative motion between the dispensing head and the substrate carrier platform in use.

6. Dispensing head according to any one or more of the preceding claims, further comprising a height adjustment actuator cooperating with the solid radiation body, for adjusting the height of the radiation face above the substrate carrier platform or a substrate surface located thereon, wherein the height adjustment actuator is configured to be controlled by a controller for adjusting said height dependent on an areal density of printed material in an area surrounding a deposition location on the substrate surface in use.

7. Dispensing head according to any one or more of the preceding claims, further comprising a controller for controlling the material heating element, such as to control a temperature of the solid radiation body.

8. Dispensing head according to claims 5 and 7, wherein the controller is further configured for controlling the rotation actuator, wherein the rotation actuator is controlled dependent on a direction of motion between the dispensing head and the substrate carrier platform for aligning the solid radiation body.

9. Dispensing head according to claims 5 and 7, wherein the controller is further configured for controlling the height adjustment actuator, wherein the height of the radiation face is controlled dependent on the areal density of printed material in the area surrounding the deposition location on the substrate surface in use.

10. Dispensing head according to any of the preceding claims, the dispensing head further comprising a further heating unit operatively associated with the material passage to form a liquefying zone for liquefying the material in the material passage and located between the receiving inlet and the dispensing outlet for dispensing the material in a liquefied state.

11. Dispensing head according to any of the preceding claims, wherein the solid radiation body is shaped such as to, from the dispensing outlet in a radial direction, gradually decrease the height of the radiation face above the substrate carrier platform or a substrate surface located thereon, such as to provide a compacting area for exerting pressure on a build material deposited on the substrate carrier platform or on a substrate surface.

12. Material heating element for use in a dispensing head according to any one or more of the preceding claims, wherein the material heating element comprises a mounting structure configured for receiving a dispensing outlet of the dispensing head for mounting the material heating element to the dispensing head, the material heating element further comprising a solid radiation body extending from the mounting structure at least in a radial direction for defining a radiation face toward a substrate carrier platform in use, further comprising a thermal isolation structure for thermally separating the solid radiation body from the dispensing outlet.

13. Material heating element according to claim 12, wherein at least one of:
the radiation body is made of a material including at least one element of a group comprising: a metal, a ceramic, or a thermosetting polymer; or
wherein the radiation body is made of metal and wherein the radiation face of the radiation body comprises a metal oxide surface; or
wherein the radiation body is made of metal and wherein the radiation face comprises a coating layer of a material providing the radiation body with an emissivity in excess of an emissivity of the metal; or
wherein the radiation body is at least one of: a bar; a plurality of bars or legs extending in multiple directions from the dispensing outlet; a disc; or a circumferential element providing the radiation face and enclosing the dispensing outlet.

14. Material heating element according to any one or more of claims 12-13, further comprising one or more of:
a rotation actuator for rotating the solid radiation body relative to the dispensing outlet, wherein the mounting structure is configured for mounting the solid radiation body to the dispensing head in a rotatable manner, and wherein the rotation actuator is configured for cooperating with a controller such as to align an elongated shape of the radiation body with a direction of relative motion between the dispensing head and the substrate carrier platform in use; or
a height adjustment actuator cooperating with the solid radiation body, for adjusting the height of the radiation face above the substrate carrier platform or a substrate surface located thereon, wherein the height adjustment actuator is configured to be controlled by a controller for adjusting said height dependent on an areal density of printed material in an area surrounding a deposition location on the substrate surface in use; or
a heater for heating the solid radiation body, wherein the heater is configured for being controlled by a controller for controlling a temperature of the solid radiation body; or
a controller.

15. Material heating element according to any of the claims 12-14, wherein the solid radiation body is shaped such as to, from the dispensing outlet in a radial direction, gradually decrease the height of the radiation face above the substrate carrier platform or a substrate surface located thereon, such as to provide a compacting area for exerting pressure on a build material deposited on the substrate carrier platform or on a substrate surface.

16. Method of manufacturing an object by means of fused filament type additive manufacturing, the method comprising:
dispensing, by a dispensing head, a material onto a substrate carrier platform of an additive manufacturing apparatus, the dispensing comprising:
receiving strands of solid material via a receiving inlet;
driving, using a driving actuator, the material through the material passage by engagement of the strands of solid material, for passing the material via a material passage to a dispensing outlet; and
heating the material for bringing the material in a liquefied state such as to serve as build material;
wherein the heating comprises heating at least one of the substrate carrier platform or a substrate surface on the platform by radiating heat, using the material heating element via a solid radiation body extending from the dispensing outlet at least in a radial direction to define a radiation face toward the substrate carrier platform, wherein the radiation body is thermally separated from the dispensing outlet.

17. Method according to claim 16, further comprising controlling, using a controller, a temperature of the solid radiation body, wherein the controlling includes:
estimating a residence time of the dispensing head above an area of at least one of a substrate surface or the substrate carrier platform based on printing data for a layer of the object;
setting the temperature reversely dependent on the residence time estimated.

18. Method according to claim 17, wherein at least one of the material heating element or the dispensing head comprises a height adjustment actuator cooperating with the solid radiation body, and wherein the controlling further comprises:
determining, by the controller using the printing data, an areal density of printed material in an area surrounding a deposition location on the substrate surface; and
adjusting, by the controller using the height adjustment means, a height of the radiation face above the substrate carrier platform or the substrate surface located thereon, dependent on the determined areal density of printed material.

19. Method according to one or more of claims 17 or 18, wherein the radiation face has an elongated shape and wherein the solid radiation body is mounted to the dispensing head in a rotatable manner, and wherein the controlling further comprises:
determining, by the controller, a direction of relative motion between the dispensing head and the substrate carrier platform based in the printing data; and
rotating, using a rotation actuator, the solid radiation body relative to the dispensing outlet such as to align the elongated shape of the radiation body with the direction of relative motion.

20. Additive manufacturing apparatus comprising at least one of a dispensing head according to any of the claims 1-11 or a material heating element according to any of the claims 12-15, or being configured for performing a method according to any of the claims 16-19.
